# EUROPÄISCHE PATENTANMELDUNG

(11) **EP 3 514 012 A1**
(43) Veröffentlichungstag der Anmeldung: **24.07.2019**
(21) Anmeldenummer: 18152782.1
(22) Anmeldetag: 22.01.2018
(51) Int. Cl.: B60Q 1/52

(54) **VERFAHREN ZUR WARNUNG BEI UNTERSCHREITUNG EINES SICHERHEITSABSTANDS ZWISCHEN AUFEINANDER FOLGENDEN FAHRZEUGEN SOWIE ZUR DURCHFÜHRUNG DES VERFAHRENS GEEIGNETE FAHRZEUGLEUCHTE**

(71) Anmelder: odelo GmbH, 70329 Stuttgart (DE)
(72) Erfinder: EBENBICHLER, Albert, 73728 Esslingen (DE)
(74) Vertreter: Benninger, Johannes

(57) **Zusammenfassung**

Es werden ein Verfahren zur Warnung bei Unterschreitung eines Sicherheitsabstands (E) zwischen aufeinander folgenden Fahrzeugen, einem eigenen Fahrzeug (A) und einem diesem nachfolgenden Fahrzeug (B), und eine zur Durchführung eines solchen Verfahrens geeignete Fahrzeugleuchte (01) beschrieben. Das Verfahren sieht vor, dass vom eigenen Fahrzeug (A) aus ein Abstand (F) zum nachfolgenden Fahrzeug (B) erfasst wird, der erfasste Abstand (F) mit einem dem Sicherheitsabstand (E) entsprechenden Schwellenwert verglichen wird, und wenn das Ergebnis des Vergleichs ist, dass der erfasste Abstand (F) kleiner ist, als der Schwellenwert, eine zumindest kurzzeitige Änderung des momentanen Betriebszustands wenigstens einer vom nachfolgenden, fremden Fahrzeug (B) aus erkennbaren Lichtfunktion am eigenen Fahrzeug (A) erfolgt. Die Fahrzeugleuchte (01) umfasst zumindest ein Leuchtmittel mit mindestens einer Lichtquelle zur Erfüllung wenigstens einer Lichtfunktion, sowie:
- Mittel zur Abstandsmessung zu einem einem mit der Fahrzeugleuchte (01) ausgestatteten eigenen Fahrzeug (A) nachfolgenden, fremden Fahrzeug (B), und
- mit den Mitteln zur Abstandsmessung verbundene Mittel zum Vergleich des gemessenen Abstands (F) mit einem Schwellenwert.

Die Mittel zum Vergleich sind mit mindestens einer Lichtquelle der Fahrzeugleuchte (01) derart verbunden, dass sie eine Stromzufuhr zu der Lichtquelle herzustellen und/oder zu unterbrechen in der Lage sind, mit der Folge, dass die Mittel zum Vergleich abhängig vom Ergebnis des Vergleichs und abhängig vom momentanen Betriebszustand der Lichtquelle diese ein- oder auszuschalten in der Lage sind.

## Beschreibung

Die Erfindung betrifft ein Verfahren zur Warnung bei Unterschreitung eines Sicherheitsabstands zwischen aufeinander folgenden Fahrzeugen, insbesondere Automobilen gemäß dem Oberbegriff des Anspruchs 1, sowie eine Fahrzeugleuchte gemäß dem Oberbegriff des Anspruchs 13.

Insbesondere beschäftigt sich die Erfindung mit einer Verbesserung der Verkehrssicherheit durch eine adaptive Abstandswarn-Lichtfunktion einer Fahrzeugleuchte, insbesondere einer Heckleuchte für ein Fahrzeug, insbesondere ein Kraftfahrzeug.

Ein zu geringer Abstand zu dem voraus fahrenden Fahrzeug kann bei einer Vollbremsung des vorausfahrenden Fahrzeuges zu einem Auffahrunfall führen.

Abhilfe kann durch Einhaltung eines einem zur Vermeidung eines Auffahrunfalls notwendigen Mindestabstand proportionalen Sicherheitsabstands geschaffen werden. Dieser Mindestabstand ist einerseits abhängig von den herrschenden physikalischen Randbedingungen und andererseits vom physiologisch bedingten Reaktionsvermögen des Fahrers des nachfolgenden Fahrzeugs.

Diesen Sicherheitsabstand zu bemessen obliegt bislang zumeist dem Fahrer des nachfolgenden Fahrzeugs, der sich hierzu diverser in der Fahrschule erlernter Faustregeln zu bedienen hat, wie etwa Bremsabstand = Halber Tacho-Wert in Metern, wie beispielsweise 40 m Sicherheitsabstand bei 80 km/h. Diese Faustregeln sind aber entsprechen vage, weil die Abstände beispielsweise anhand der Fahrbahnmarkierungen und/oder anhand von zur Abgrenzung der Fahrbahn und zum besseren Erkennen deren Verlaufs vorgesehener Leitpfosten geschätzt werden müssen.

Dunkelheit sowie witterungsbedingte schlechte Sichtverhältnisse erschweren die Schätzung der Abstände zusätzlich.

Aus dem Stand der Technik ist bekannt, vom eigenen, nachfolgenden Fahrzeug aus Abstände zu vorausfahrenden Fahrzeugen zu erfassen und konstant einzuhalten.

Ebenfalls sind vorder- und/oder rückseitig am eigenen Fahrzeug angeordnete Sensoren bekannt, welche zur Unterstützung beim Einparken Abstände zu vor und/oder hinter dem eigenen Fahrzeug befindlichen Objekten erfassen und bei Unterschreitung vorgegebener Schwellenwerte zunehmende Warnsignale an den Fahrer des eigenen Fahrzeugs ausgeben.

Darüber hinaus ist bekannt, dass die zur Unterstützung beim Einparken erwähnten Sensoren während der Fahrt, insbesondere bei langsamer Fahrt des eigenen Fahrzeugs aktiviert sind.

Ferner ist durch DE 27 04 178 A1 bekannt, am vorausfahrenden Fahrzeug eine Sendeeinrichtung für Abstandsmesssignale und am nachfolgenden Fahrzeug eine Empfangseinrichtung für die Abstandsmesssignale sowie eine Auswerte- und Anzeigeeinheit vorzusehen, welche den Abstand zum Vordermann erfasst und bei Unterschreitung eines Mindestabstands eine Warnung ausgibt.

Ein solcher Warnhinweis für das eigene, nachfolgende Fahrzeug, wenn dieses den erforderlichen Mindestabstand unterschreitet, kann Auffahrunfälle vermeiden helfen.

Nachteilig am Stand der Technik ist die notwendige Infrastruktur am nachfolgenden Fahrzeug.

Eine Fahrzeugleuchte umfasst beispielsweise einen im Wesentlichen von einem Leuchtengehäuse und einer Lichtscheibe umschlossenen Leuchteninnenraum und mindestens ein gegebenenfalls zumindest zum Teil darin beherbergtes, mindestens eine Lichtquelle umfassendes Leuchtmittel für wenigstens eine Lichtfunktion der Fahrzeugleuchte.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest. Je höher dabei die Helligkeit ist, um so weiter trägt die Lichtfunktion bzw. um so größer ist die kurz als Sichtweite bezeichnete Entfernung, aus der sie wahrgenommen werden kann.

Für die einzelnen Lichtfunktionen sind zum Teil unterschiedliche Helligkeiten bzw. Sichtweiten sowie zum Teil unterschiedliche Lichtfarben vorgegeben.

Aufgrund ihres hohen Wirkungsgrads bei der Umwandlung von elektrischem Strom in für das menschliche Auge sichtbares Licht kommen als Lichtquellen von Leuchtmitteln für Fahrzeugleuchten vermehrt Halbleiterlichtquellen zum Einsatz, allen voran anorganische Leuchtdioden sowie in wenigen Fahrzeugmodellen auch bereits organische Leuchtdioden.

Anorganische Leuchtdioden bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Fahrzeugleuchten bekannt, in denen reine LED-Chips ohne angeformte Primäroptiken zum Einsatz kommen.

Im Folgenden wird deshalb der Einfachheit halber nicht mehr zwischen anorganischer Leuchtdiode und LED-Chip unterschieden und statt dessen einheitlich der Begriff LED stellvertretend für beides verwendet, es sei denn, es ist explizit etwas anderes erwähnt.

Eine kurz als OLED (Organic Light Emitting Diode; OLED) bezeichnete organische Leuchtdiode ist ein leuchtendes Dünnschichtbauelement aus organischen halbleitenden Materialien mit mindestens einer zwischen elektrisch leitenden, beispielsweise metallischen Schichten für Anode und Kathode eingeschlossen Emitterschicht. Die Stärke oder anders ausgedrückt Dicke der Schichten liegt in einer Größenordnung von etwa 100 nm. Typischerweise beträgt sie je nach Aufbau 100 nm bis 500 nm.

Die Schichten einer OLED sind nacheinander auf ein Substrat aufgebracht, welches gemeinsam mit einer auf die oberste Schicht aufgebrachten Verkapselung die Schichten der OLED gegen Wasser, Sauerstoff sowie gegen andere Umwelteinflüsse, wie etwa Kratzbeschädigung und/oder Druckbelastung schützt.

Im Unterschied zu anorganischen Leuchtdioden benötigen OLEDs keine einkristallinen Materialien. Im Vergleich zu LEDs lassen sich OLEDs daher in kostengünstiger Dünnschichttechnik herstellen. OLEDs ermöglichen dadurch die Herstellung flächiger Lichtquellen, die einerseits sehr dünn und andererseits als durch die Lichtscheibe einer Fahrzeugleuchte hindurch sichtbare leuchtende Fläche eingesetzt einen besonders homogenes Erscheinungsbild aufweisen.

Allen Halbleiterlichtquellen ist deren schnelles Ansprechen mit dem Beginn eines Stromdurchflusses in Durchlassrichtung gemein, entsprechend deren im Gegensatz beispielsweise zu als Lichtquellen von Leuchtmitteln in Fahrzeugleuchten ebenfalls eingesetzten Glühlampen und Gasentladungslampen verzögerungsfreier, sofortiger Lichtabstrahlung.

Um die Wahrnehmbarkeit beziehungsweise Wahrnehmungskraft von Lichtfunktionen einer Fahrzeugleuchte für andere Verkehrsteilnehmer zu erhöhen ist bekannt, diese innerhalb der gesetzlich zugelassenen Grenzen aufleben zu lassen.

Ein bekanntes Beispiel sind so genannte dynamische Lichtfunktionen, bei denen die vom Gesetzgeber eingeräumte Zeit, die eine Glühlampe als eine gesetzlich erlaubte Lichtquelle eines zur Erfüllung einer Lichtfunktion vorgesehenen Leuchtmittels benötigt, um ihre volle Leuchtstärke zu erreichen, genutzt wird, um einen visuellen Effekt zu erzielen.

Ein Beispiel eines solchen visuellen Effekts ist das Wischen in Richtung der Richtung einer beabsichtigten Fahrtrichtungsanzeige bei einer Wiederholblinklichtfunktion eines Fahrtrichtungsanzeigers.

Eine solche dynamische Lichtfunktion wird durch ein Leuchtmittel mit mehreren, nacheinander der Reihe nach angehenden LEDs als Lichtquellen verwirklicht.

Untersuchungen haben gezeigt, dass hierdurch die Verkehrssicherheit erhöht wird, da durch das Wischen bereits mit Beginn der Wahrnehmung der Lichtfunktion durch andere Verkehrsteilnehmer die durch die Lichtfunktion angezeigte beabsichtigte Fahrtrichtungsänderung von den anderen Verkehrsteilnehmern erkannt wird.

Ferner ist bekannt, dass Leuchtanzeigen, beispielsweise in einem Armaturenbrett eines Fahrzeugs angezeigte Warnanzeigen, die mit ihrem Aufleuchten dem Betrachter entgegen zu springen scheinen, durch ihre scheinbare Bewegung auf den Betrachter zu von diesem besonders gut wahrgenommen werden und diesen alarmieren, auch wenn dessen Blick nicht unmittelbar auf einen Bereich gerichtet ist, in dem die Warnanzeige angezeigt wird. Sie haben daher eine erhöhte Wahrnehmungskraft zur Folge.

Um die Wahrnehmbarkeit beziehungsweise Wahrnehmungskraft von Lichtfunktionen einer Fahrzeugleuchte für andere Verkehrsteilnehmer zu erhöhen ist darüber hinaus bekannt, diese situationsbezogen hervorzuheben.

Eine solche situationsbezogene Hervorhebung ist insbesondere bei Heckleuchten in Form so genannter adaptiver Lichtfunktionen anzutreffen.

Eine adaptive Lichtfunktion erfüllt eine über deren vorgesehene, normale Funktion der Lichtfunktion hinausgehende, gegebenenfalls zusätzliche, die vorgesehene, normale Funktion hervorhebende und/oder ergänzende Funktion.

Ein prominentes Beispiel ist eine von einzelnen Herstellern auch aktives Bremslicht oder dynamisches Bremslicht genannte adaptive Bremslichtfunktion.

Adaptiv ist in diesem Zusammenhang als in mindestens zwei Eskalationsstufen anpassungsfähig zu verstehen, im Fall einer Bremslichtfunktion meistens zweistufig.

Deren über die normale Funktion eines bestimmungsgemäßen Aufleuchtens der Bremslichtfunktion bei Betätigung der Betriebsbremse hinausgehende Funktion liegt in einer Information nachfolgender Verkehrsteilnehmer über die Stärke der vom vorausfahrenden Fahrzeug ausgeführten Bremsung durch zusätzliche Hervorhebung der Bremslichtfunktion. Dabei wird die adaptive Bremslichtfunktion nicht nur verwendet, um eine Bereitschaft oder Betätigung der Betriebsbremse anzuzeigen, was wie bei einer herkömmlichen Bremslichtfunktion durch deren bestimmungsgemäßes Aufleuchten ab einem leichten Niederdrücken des Bremspedals erfolgt, sondern zusätzlich, um den nachfolgenden Verkehr über die Stärke und/oder Plötzlichkeit der Bremsung zu informieren, was beispielsweise durch Hinzufügen zusätzlicher Leuchtflächen und damit einhergehend Vergrößerung der bei aktiver Bremslichtfunktion aufleuchtenden Leuchtfläche beispielsweise oberhalb eines Schwellenwerts des vermittels des Bremspedals aufgebrachten Bremsdrucks und/oder beispielsweise oberhalb eines Schwellenwerts der Betätigungsgeschwindigkeit des Bremspedals erfolgen kann. Eine solche adaptive Bremslichtfunktion unterscheidet nicht zwischen einer normalen Betätigung der Betriebsbremse und einer Notbremsung, sondern lediglich zwischen leichter und starker Betätigung der Betriebsbremse. Bei letzterer muss es sich demnach nicht unbedingt um eine Notbremsung handeln. Bei normaler Betätigung der Betriebsbremse leuchtet eine Leuchtfläche einer Heckleuchte je Seite des Fahrzeugs auf. Bei einer starken und/oder plötzlichen Betätigung der Betriebsbremse leuchten je zwei Leuchtflächen einer Heckleuchte je Seite des Fahrzeugs auf. Dabei handelt es sich typischerweise um die bei Erfüllung der normalen Bremslichtfunktion aufleuchtende Leuchtfläche sowie um eine zusätzliche Leuchtfläche, beispielsweise zusätzlich um die Leuchtfläche der Nebelschlusslichtfunktion an beiden Seiten. Alternativ oder zusätzlich können alle in einer höchsten Eskalationsstufe einer adaptiven Bremslichtfunktion aktiven Leuchtflächen deutlich heller als bei einer normalen Betätigung der Betriebsbremse leuchten.

Zur Verwirklichung einer adaptiven Bremslichtfumktion mit Notbremsungserkennung ist beispielsweise bekannt, anhand des Bremsdrucks, der Betätigungsgeschwindigkeit des Bremspedals, der Fahrgeschwindigkeit, dem Vergleich der vermittels eines Beschleunigungssensors ermittelten tatsächlichen und der anhand eines Bremsdrucksensors ermittelten gewünschten Verzögerung, der Haftreibung zwischen Reifen und Fahrbahn, der Aktivierung von Bremsassistenzfunktionen, wie etwa einem Antiblockiersystem (ABS), einem elektronischen Stabilitätsprogramm (ESP) und/oder einem umgebungsüberwachenden Notbremssystem, eine Gefahrensituation zu erkennen und im Fall deren Auftretens eine Aktivierung der Bremslichtfunktion sowie zusätzlich oder alternativ bei bereits aktiver Bremslichtfunktion deren Hervorhebung zu veranlassen.

Dabei gibt es verschiedene Arten der Hervorhebung von adaptiven Bremslichtfunktionen beziehungsweise Notbremsanzeigen.

Bei einer adaptiven Bremslichtfunktion mit Notbremserkennung leuchtet die Bremslichtfunktion bei einer normalen Betätigung der Betriebsbremse wie bei jedem anderen Kraftfahrzeug auf. Bei einer Notbremsung können die Bremslichter allerdings mehrmals pro Sekunde blinken. Dadurch wird der nachfolgende Verkehr gewarnt und die Reaktionszeit laut einer Studie verkürzt. Wird bis zum Stillstand gebremst, kann sich anschließend die Warnblinkanlage einschalten, indem an allen am Fahrzeug zur Erfüllung der Wiederholblinklichtfunktion verbauten Fahrzeugleuchten die Wiederholblinklichtfunktion aktiviert wird. Eine Deaktivierung der Warnblinkanlage kann automatisch durch Fortsetzen der Fahrt oder manuell durch Betätigen der Warnblinktaste erfolgen.

Zusammengefasst ziehen sowohl dynamische Lichtfunktionen, als auch adaptive Lichtfunktionen die Aufmerksamkeit anderer Verkehrsteilnehmer an, sei es durch ein Auflebenlassen, oder durch eine Hervorhebung bestimmungsgemäß verwirklichter Lichtfunktionen. Hierdurch tragen sie einer Verbesserung der Sicht- und Wahrnehmbarkeit von Lichtfunktionen einer Fahrzeugleuchte bei, einhergehend mit einer Steigerung der Verkehrssicherheit.

Eine Aufgabe der Erfindung ist ein Verfahren zur Warnung bei Unterschreitung eines Sicherheitsabstands zwischen aufeinander folgenden Fahrzeugen, insbesondere Automobilen, sowie eine zur Durchführung eines solchen Verfahrens geeignete und/oder einer Durchführung eines solchen Verfahrens beitragende Fahrzeugleuchte anzugeben, welche die Verkehrssicherheit nachhaltig erhöhen, ohne beim nachfolgenden Fahrzeug eine gesonderte, durch besondere Einrichtungen gebildete Infrastruktur vorauszusetzen.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach ein Verfahren zur Warnung bei Unterschreitung eines Sicherheitsabstands zwischen aufeinander folgenden Fahrzeugen, einem eigenen Fahrzeug und einem diesem nachfolgenden, fremden Fahrzeug.

Bei den Fahrzeugen handelt es sich insbesondere um zur Teilnahme am Straßenverkehr vorgesehene und/oder zugelassene Automobile und/oder Kraftfahrzeuge. Grundsätzlich ist die Erfindung jedoch auch zur Umsetzung in Verbindung mit Wasserfahrzeugen insbesondere zur Freizeit- und/oder Sportschifffahrt geeignet.

Das Verfahren sieht vor, vom vorausfahrenden, eigenen Fahrzeug aus einen Abstand zum nachfolgenden, fremden Fahrzeug beispielsweise permanent oder in beispielsweise eng getakteten, diskreten Schritten zu messen und hierdurch zu überwachen.

Mit anderen Worten sieht das Verfahren zunächst eine Überwachung des Abstands zwischen dem vorausfahrenden, eigenen Fahrzeug und dem nachfolgenden, fremden Fahrzeug durch beispielsweise permanente oder beispielsweise eng getaktete, in diskreten Schritten vorzunehmende Messung des Abstands vom vorausfahrenden, eigenen Fahrzeug aus zum nachfolgenden, fremden Fahrzeug vor.

Das Verfahren sieht ferner einen beispielsweise permanenten oder in beispielsweise eng getakteten, beispielsweise mit der Messung synchronisierten diskreten Schritten stattfindenden Vergleich des gemessenen Abstands mit einem einem Mindestabstand proportionalen Schwellenwert vor.

Mit anderen Worten sieht das Verfahren im Anschluss an die Überwachung des Abstands einen Vergleich der Messung mit einem einem Mindestabstand proportionalen Schwellenwert vor.

Der Mindestabstand kann abhängig von den herrschenden physikalischen Randbedingungen und vom physiologisch bedingten Reaktionsvermögen eines durchschnittlichen Fahrers des nachfolgenden Fahrzeugs gewählt sein.

Denkbar ist beispielsweise, dass für unterschiedliche Witterungsbedingungen verschiedene Proportionalitätsfaktoren hinterlegt sind, die beispielsweise in Abhängigkeit von einer Temperatur- und/oder Niederschlags- und/oder Sichtweitenmessung ausgewählt werden können. Alternativ können verschiedene Mindestabstände und/oder verschiedene Schwellenwerte beispielsweise in Abhängigkeit von einer Temperatur- und/oder Niederschlags- und/oder Sichtweitenmessung ausgewählt werden.

Das Verfahren sieht darüber hinaus in Abhängigkeit vom Ergebnis des Vergleichs die Ausgabe eines Warnsignals durch zumindest kurzzeitiges Aufleuchten mindestens einer Lichtfunktion wenigstens einer Fahrzeugleuchte des eigenen, vorausfahrenden Fahrzeugs vor, wenn das Ergebnis des Vergleichs eine Unterschreitung des Schwellenwerts ist.

Mit anderen Worten sieht das Verfahren im Anschluss an den Vergleich der Messung mit einem einem Mindestabstand proportionalen Schwellenwert vor, dass wenn das Ergebnis der Messung kleiner ist, als der Schwellenwert, die Ausgabe eines Warnsignals durch zumindest kurzzeitiges Aufleuchten mindestens einer Lichtfunktion wenigstens einer Fahrzeugleuchte des eigenen, vorausfahrenden Fahrzeugs erfolgt.

Dies kann beispielsweise synchron mit dem Ergebnis des Vergleichs stattfinden.

Ein erfindungsgemäßes Verfahren sieht demnach vor, vom vorausfahrenden, eigenen Fahrzeug aus einen Abstand zum nachfolgenden, fremden Fahrzeug zu erfassen. Anschließend sieht das Verfahren vor, den erfassten Abstand mit einem einem mindestens einzuhaltenden Sicherheitsabstand entsprechenden Schwellenwert zu vergleichen. Ist das Ergebnis des Vergleichs, dass der erfasste Abstand größer ist, als der Schwellenwert, so kann das Verfahren zumindest so lange erneut von vorn beginnen, wie das eigene Fahrzeug in Betrieb ist. Ist das Ergebnis des Vergleichs hingegen, dass der erfasste Abstand kleiner ist, als der Schwellenwert, so sieht das Verfahren dann eine zumindest kurzzeitige Aktivierung wenigstens einer vom nachfolgenden, fremden Fahrzeug aus erkennbaren Lichtfunktion mindestens einer Fahrzeugleuchte des vorausfahrenden, eigenen Fahrzeugs vor, bevor das Verfahren schließlich von vorn beginnen kann, so lange das eigene Fahrzeug in Betrieb ist.

Vereinfacht ausgedrückt vergleicht das eigene Fahrzeug den tatsächlichen, realen Abstand zu dem nachfolgenden, fremden Fahrzeug mit einem beispielsweise auf Grund von Parametern wie Geschwindigkeit, eigene Bremsleistung, durchschnittlicher Reaktionsweg, Fahrbahnverhältnisse, etc. ermittelten Mindestabstand, der beispielsweise auch die Geschwindigkeit und Geschwindigkeitsänderung des nachkommenden fremden Fahrzeugs berücksichtigen kann.

Wird nun der Abstand kleiner als ein dem Mindestabstand proportionaler Sicherheitsabstand erfolgt die Ausgabe eines Warnsignals an den Fahrer des nachfolgenden, fremden Fahrzeugs, vorzugsweise über die Bremsleuchten. Dies hat den Vorteil, dass der Fahrer des nachkommenden Fahrzeuges ganz automatisch reagiert, in dem dieser es bremst und so die potentielle Gefahrenquelle auflöst.

Das Verfahren kann darüber hinaus vorsehen, den Schwellenwert in Abhängigkeit von Umgebungsbedingungen zu verändern und hierdurch anzupassen.

Denkbare Umgebungsbedingungen können beispielsweise Witterungsbedingungen umfassen, wie etwa - ohne Anspruch auf Vollständigkeit der nachfolgenden Auflistung - Außentemperatur, Sichtweite, Nässe, Glätte, Gefälle, Steigung sowie Kombinationen hiervon.

Alternativ oder zusätzlich können denkbare Umgebungsbedingungen beispielsweise Verkehrsbedingungen umfassen, wie etwa - ohne Anspruch auf Vollständigkeit der nachfolgenden Auflistung - Fahrgeschwindigkeit des eigenen Fahrzeugs, Relativgeschwindigkeit des fremden Fahrzeugs zum eigenen Fahrzeug, Geschwindigkeitsänderung des eigenen Fahrzeugs, Geschwindigkeitsänderung des fremden Fahrzeugs, Abstand zu einem vorausfahrenden, weiteren fremden Fahrzeug, Kolonnenfahrt, Stau, Verkehrszeichen (dynamische Geschwindigkeitsbeschränkungen, Ampeln), sowie Kombinationen hiervon.

Der Schwellenwert kann hierbei durch einen veränderlichen Proportionalitätsfaktor, der mit einem sich zumindest anhand physikalischer Randbedingungen ergebenden Mindestabstand multipliziert wird, kontinuierlich oder in diskreten Schritten, beispielsweise anhand von in einem Datenspeicher abgelegten Tabellenwerten angepasst beziehungsweise verändert werden.

Alternativ kann der Schwellenwert selbst aus einer Reihe von beispielsweise in einem Datenspeicher abgelegten Tabellenwerten anhand von Umgebungsbedingungen ausgewählt werden.

Der dem Sicherheitsabstand und dem Schwellenwert proportionale, erforderliche Mindestabstand kann von vielen Faktoren abhängen. Geschwindigkeit, Bremswirkung des Fahrzeuges, technische Ausstattung, Fahrbahn, Temperatur, Witterung, Bereifung, etc.. All diese Faktoren könnten in der Abstandsbewertung mit einfließen. Ebenso wie der Umstand, dass der Mindestabstand von einer Vollbremsung ausgeht. Beispielsweise kann das Warnsignal auch erst bei einer deutlicheren Unterschreitung, wie z.B. < 70% des erforderlichen Mindestabstandes aktiv werden.

Bei der Lichtfunktion kann es sich um eine eigens zur Warnung bei Unterschreitung des Sicherheitsabstands vorgesehene Lichtfunktion handeln. Aus zulassungstechnischen Gründen ist es jedoch vorteilhaft, hierfür eine Lichtfunktion vorzusehen, welche ansonsten eine gesetzlich vorgeschriebene Funktion erfüllt.

Beispielsweise kann es sich bei der Lichtfunktion um synchron ausgeführte Wiederholblinklichtfunktionen an beiden zum nachfolgenden, fremden Fahrzeug gerichteten und als Heckleuchten ausgebildeten Fahrzeugleuchten am Heck des eigenen Fahrzeugs handeln. Die Aktivierung der hierdurch gebildeten Warnblinklichtfunktion stellt bereits im heutigen Straßenverkehr ein gängiges Mittel dar, um andere Verkehrsteilnehmer auf eine besondere Gefahrensituation hinzuweisen.

Alternativ oder zusätzlich kann es sich bei der Lichtfunktion um eine Bremslichtfunktion handeln.

Ist die vorgesehene Lichtfunktion aufgrund eines momentan vorherrschenden Fahrzustands des eigenen Fahrzeugs momentan aktiv, so kann die zumindest kurzzeitige Aktivierung wenigstens einer vom nachfolgenden, fremden Fahrzeug aus erkennbaren Lichtfunktion mindestens einer Fahrzeugleuchte des vorausfahrenden, eigenen Fahrzeugs eine entsprechende kurzzeitige Deaktivierung wenigstens einer vom nachfolgenden, fremden Fahrzeug aus erkennbaren Lichtfunktion mindestens einer Fahrzeugleuchte des vorausfahrenden, eigenen Fahrzeugs, vorsehen, entsprechend einer Multiplikation von -1 mit -1, wobei -1 einer momentanen Aktivierung entspricht.

Darüber hinaus kann eine Kolonnenfahrterkennung vorgesehen sein, welche die zumindest kurzzeitige Aktivierung und/oder Deaktivierung wenigstens einer vom nachfolgenden, fremden Fahrzeug aus erkennbaren Lichtfunktion mindestens einer Fahrzeugleuchte des vorausfahrenden, eigenen Fahrzeugs abschaltet, sobald eine Kolonnenfahrt mit dauerhaft niedrigem Abstand zwischen aufeinanderfolgenden Fahrzeugen erkannt worden ist.

Dies kann durch Erfassung des Abstands zum Vordermann vorgenommen werden. Ist dieser ebenfalls gering, kann von Kolonnenfahrt ausgegangen werden. Eine Erfassung mehrerer fremder Fahrzeuge, vorzugsweise sowohl mehrerer vorausfahrender, als auch mehrerer nachfolgender, kann die Erkenntnis über das Vorliegen einer Kolonnenfahrt erheblich verbessern.

Es ist ersichtlich, dass die Erfindung verwirklicht sein kann durch ein Verfahren, welches den Fahrer eines einem eigenen Fahrzeug nachfolgenden, fremden Fahrzeugs dazu anhält beziehungsweise anregt, einen Sicherheitsabstands zwischen dessen Fahrzeug und dem eigenen Fahrzeug nicht zu unterschreiten.

Die Erfindung sieht demnach vor, dass der Abstand zu dem nachkommenden Fahrzeug erfasst und mit dem einem ermittelten Mindestabstand proportionalen Sicherheitsabstand verglichen wird. Wird dieser unterschritten signalisiert das vorausfahrende Fahrzeug dem Nachkommenden, dass es sich in einem gefährlich nahen Abstand befindet.

Dieses Signalisieren erfolgt vermittels zumindest kurzzeitiger Aktivierung und/oder Deaktivierung mindestens einer zum nachfolgenden Fahrzeug gerichteten und/oder im Blickfeld des Fahrers des nachfolgenden Fahrzeugs liegenden Lichtfunktion wenigstens einer am eigenen Fahrzeug angeordneten Fahrzeugleuchte, insbesondere wenigstens einer Heckleuchte.

Dieses Signalisieren erfolgt vorteilhaft anhand einer Lichtfunktion einer ohnehin am vorausfahrenden eigenen Fahrzeug angeordneten Fahrzeugleuchte, insbesondere einer Heckleuchte.

Besonders vorteilhaft erfolgt das Signalisieren mittels einer Lichtfunktion, die zur Teilnahme am Straßenverkehr vorgeschrieben ist. Hierdurch entfällt ein zusätzlicher Teil ansonsten notwendiger Infrastruktur.

Die Ausgabe eines Warnhinweises vermittels einer sowohl eine zur Teilnahme am Straßenverkehr vorgeschriebenen, als auch der Abstandswarnung dienenden und dadurch adaptiven Lichtfunktion einer Fahrzeugleuchte des eigenen Fahrzeugs an das nachfolgende Fahrzeug, wenn dieses den erforderlichen Mindestabstand unterschreitet, hilft Auffahrunfälle zu vermeiden.

Das Signal könnte über die gewöhnlichen Bremslichter erfolgen. Dies hat den Vorteil, dass der nachkommende Fahrer nichts Neues lernen muss. Er sieht die Bremslichter und bremst automatisch selber. Ohne es zu wissen löst er dadurch die Gefahrensituation auf.

Wird ein anderes, neues Signal, beispielsweise eine flackernde dritte Bremslichtfunktion oder gar eine eigene Lichtfunktion vorgesehen, dann könnte dies zumindest unmittelbar nach der Einführung des erfindungsgemäßen Verfahrens in den Straßenverkehr den nachfolgenden Fahrer stärker irritieren, hätte aber zusätzlich den Vorteil, dass der Nachfolgende dadurch sein Abstandsempfinden überprüfen und dadurch verbessern kann. Eine nachhaltige Verbesserung des Abstandsempfindens ist die Folge.

Die Abstandsmessung kann in die Fahrzeugleuchte des eigenen Fahrzeugs integriert sein. Zur Abstandsmessung eingesetzte Mittel können einen oder mehrere Abstandssensoren sowie mindestens eine beispielsweise mit wenigstens einem zur Erfüllung wenigstens einer Lichtfunktion einer am Heck des eigenen Fahrzeugs angeordneten Fahrzeugleuchte vorgesehenen Leuchtmittel mit mindestens einer Lichtquelle verbundenen Auswerte- und Steuereinheit umfassen.

Dies führt unmittelbar zu einem nachfolgend beschriebenen, zweiten Gegenstand der Erfindung.

Dieser betrifft eine zur Ausführung eines voranstehend beschriebenen Verfahrens geeignete Fahrzeugleuchte.

Die Fahrzeugleuchte umfasst zumindest ein Leuchtmittel mit mindestens einer Lichtquelle zur Erfüllung wenigstens einer Lichtfunktion der Fahrzeugleuchte.

Darüber hinaus umfasst die Fahrzeugleuchte Mittel zur Abstandsmessung zu einem einem mit der Fahrzeugleuchte ausgestatteten eigenen Fahrzeug nachfolgenden, fremden Fahrzeug.

Die Mittel zur Abstandsmessung erzeugen ein Ausgangssignal, welches einem Abstand eines mit der Fahrzeugleuchte ausgestatteten eigenen Fahrzeugs zu einem diesem nachfolgenden, fremden Fahrzeug proportional ist, oder dem sonst wie der Abstand zu entnehmen ist.

Ferner umfasst die Fahrzeugleuchte mit den Mitteln zur Abstandsmessung verbundene Mittel zum Vergleich des gemessenen Abstands mit einem Schwellenwert.

Die Mittel zum Vergleich vergleichen das Ausgangssignal der Mittel zur Abstandsmessung mit einem Schwellenwert für das Ausgangssignal. Das Ausgangssignal und der Schwellenwert können beide analog oder digital vorliegen, oder gemischt.

Die Mittel zum Vergleich sind mit mindestens einer Lichtquelle der Fahrzeugleuchte derart verbunden, dass sie eine Stromzufuhr zu der Lichtquelle herzustellen und/oder zu unterbrechen in der Lage sind, mit der Folge, dass die Mittel zum Vergleich abhängig vom Ergebnis des Vergleichs und abhängig vom momentanen Betriebszustand der Lichtquelle diese ein- oder auszuschalten in der Lage sind.

Die Fahrzeugleuchte kann darüber hinaus Datenspeichermittel zur Speicherung zumindest eines Schwellenwerts und/oder eines Proportionalitätsfaktors umfassen.

Ferner kann die Fahrzeugleuchte Mittel zur Erfassung und/oder Erlangung von Umgebungsbedingungen sowie Mittel zur Veränderung des Schwellenwerts in Abhängigkeit von den Umgebungsbedingungen umfassen.

Zur Erfassung von Umgebungsbedingungen können beispielsweise Sensoren vorgesehen sein ,welche Temperatur und/oder Sichtweite und/oder Niederschlagsmenge zu erfassen in der Lage sind.

Zur Erlangung von Umgebungsbedingungen hingegen kann eine Schnittstelle zu einem entsprechende Informationen über Umgebungsbedingungen fahrzeugseitig vorhaltenden Bordnetzwerk vorgesehen sein.

Wichtig ist in diesem Zusammenhang hervorzuheben, dass alternativ oder zusätzlich momentane Fahrzustände zumindest fremder Fahrzeuge in der Umgebung des eigenen Fahrzeugs zumindest Teil von Umgebungsbedingungen bilden können, welche in eine Veränderung des Schwellenwerts mit einfließen können. Auch Fahrzustände des eigenen Fahrzeugs können in eine Veränderung des Schwellenwerts mit einfließen. Ohne Anspruch auf Vollständigkeit können dies momentane Geschwindigkeit momentane Bremsverzögerung, momentane Beschleunigung, momentaner Abstand zum Vordermann des eigenen Fahrzeugs, momentane Geschwindigkeit momentane Bremsverzögerung, momentane Beschleunigung, momentaner Abstand eines fremden Fahrzeugs zum Vordermann und/oder zum Nachfolgenden sowie Kombinationen hiervon sein.

Die Fahrzeugleuchte kann einen Speicher zum zumindest kurzzeitigen Betrieb einer Lichtquelle eines Leuchtmittels der Fahrzeugleuchte benötigter elektrischer Energie umfassen. Dieser kann beispielsweise kapazitiver Natur sein. Er kann beispielsweise während einer im normalen Gebrauch eines Fahrzeugs stattfindenden regulären Aktivierung einer durch die Lichtquelle des entsprechenden Leuchtmittels verwirklichten Lichtfunktion aufgeladen werden.

Es ist ersichtlich, dass dieser Teil der Erfindung die gestellte Aufgabe unter vollständiger Beseitigung der Nachteile des Standes der Technik durch eine Abstandsmessung vom vorausfahrenden Fahrzeug aus und durch eine adaptive Lichtfunktion ebenfalls am vorausfahrenden Fahrzeug löst, welche adaptive Lichtfunktion bei Unterschreitung eines Mindestabstands aktiviert wird, beispielsweise durch mehrmaliges Aufblinken der Bremslichtfunktion, wobei die Abstandsmessung in die Fahrzeugleuchte des eigenen Fahrzeugs integriert ist. Zur Abstandsmessung eingesetzte Mittel können einen oder mehrere Abstandssensoren sowie mindestens eine beispielsweise mit wenigstens einem zur Erfüllung wenigstens einer Lichtfunktion einer am Heck des eigenen Fahrzeugs angeordneten Fahrzeugleuchte vorgesehenen Leuchtmittel mit mindestens einer Lichtquelle verbundenen Auswerte- und Steuereinheit umfassen.

Darüber hinaus kann eine Kolonnenfahrterkennung vorgesehen sein, welche die beispielsweise durch die mindestens eine Lichtquelle des wenigstens einen zur Erfüllung zumindest einer Lichtfunktion einer am Heck des eigenen Fahrzeugs angeordneten Fahrzeugleuchte vorgesehenen Leuchtmittels verwirklichte adaptive Lichtfunktion abschaltet, sobald eine Kolonnenfahrt mit dauerhaft niedrigem Abstand zwischen aufeinanderfolgenden Fahrzeugen erkannt worden ist.

Dies kann durch Erfassung des Abstands zum Vordermann vorgenommen werden. Ist dieser ebenfalls gering, kann von Kolonnenfahrt ausgegangen werden.

Die Erfindung ermöglicht auch eine Nachrüstung bestehender Fahrzeuge und erhöht die Verkehrssicherheit ohne notwendige technische Einrichtungen der anderen Verkehrsteilnehmer.

Vorteile der Erfindung gegenüber dem Stand der Technik sind unter Anderem, dass während des Betriebs des eigenen Fahrzeugs eine mögliche Gefahrensituation durch die Unterschreitung des Mindestabstandes eines nachfolgenden, fremden Fahrzeugs zum eigenen Fahrzeug erkannt, und dies dem nachfolgenden Fahrzeug beispielsweise über die Bremslichter beziehungsweise beispielsweise die Bremslichtfunktion signalisiert wird.

Der Nachkommende reagiert entsprechend intuitiv, bremst und löst die Gefahrensituation unbewusst wieder auf.

Es wird hierfür nur eine Abstandsmessvorrichtung an dem vorausfahrenden, eigenen Fahrzeug gebraucht, die nachfolgenden, fremden Fahrzeuge brauchen keine Vorrichtung dafür.

Der Schutz gilt dadurch auch für alte Fahrzeuge, ohne diese dafür auf- oder nachrüsten zu müssen

Das Verfahren wird vom vorausfahrenden, eigenen Fahrzeug aus durchgeführt, gibt das Warnsignal bei Unterschreitung des Sicherheitsabstands via einer oder mehrerer Lichtfunktionen an den Nachkommenden aus und schützt dadurch beide vor einer möglichen Kollision, sowohl das eigene Fahrzeug, als auch das fremde Fahrzeug.

Durch eine mögliche zusätzliche Erfassung der nach vorne gerichteten Verkehrssituation, insbesondere des Abstands zum unmittelbar vorausfahrenden Fahrzeug und/oder der Abstände zwischen unmittelbar vorausfahrenden Fahrzeugen, können das Verfahren und die entsprechend zur Durchführung des Verfahrens ausgestattete Fahrzeugleuchte auch dazu dienen, Staus und/oder Kolonnen-Verkehr zu erkennen.

Hierdurch kann die Beurteilung einer momentanen Situation sowohl bezüglich des Schwellenwerts beziehungsweise hinsichtlich dessen Auswahl und/oder Festlegung, als auch bezüglich einer Unterschreitung des gemessenen Abstands des nachfolgenden, fremden Fahrzeugs zum diesem vorausfahrenden, eigenen Fahrzeug nochmals verbessert werden.

Durch ein eigenständiges Warnsignal, wie etwa eine flackernde dritte Bremslichtfunktion, würden die nachkommenden Fahrzeuge ihre Abstandseinschätzung überprüfen können und diese nachhaltig verbessern.

Das Verfahren und die Fahrzeugleuchte könnten darüber hinaus die gewonnene Information über das Vorliegen einer Gefahrensituation aufgrund einer Unterschreitung des gemessenen Abstands des nachfolgenden, fremden Fahrzeugs zum diesem vorausfahrenden, eigenen Fahrzeug direkt an das nachfolgende, fremde Fahrzeug schicken und das fremde Fahrzeug verzögert selbstständig sofern eine entsprechende Einrichtung vorhanden ist.

Zusätzliche Vorteile gegenüber dem Stand der Technik sind, dass ein am eigenen Fahrzeug angeordneter, nach vorne gerichteter Abstandssensor eine auffällige Verzögerung eines vorausfahrenden, fremden Fahrzeugs schneller erkennt, als der Fahrer des eigenen Fahrzeugs. Hierdurch kann ein Bremssignal selbstständig nach hinten weitergegeben werden, wodurch unter Anderem in Kolonnenfahrt Auffahrunfälle nochmals weiter verringert werden können.

Die Fahrzeugleuchte kann einzelne oder eine Kombination der zuvor und/oder nachfolgend in Verbindung mit der Erfindung und/oder dem Verfahren beschriebene Merkmale aufweisen, ebenso wie das Verfahren einzelne oder eine Kombination mehrerer zuvor und/oder nachfolgend in Verbindung mit der Erfindung und/oder der Fahrzeugleuchte beschriebene Merkmale aufweisen und/oder verwirklichen kann.

Die Fahrzeugleuchte und/oder das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind in der nachfolgenden Figurenbeschreibung erwähnt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: eine erste Momentaufnahme einer Verkehrssituation mit einem einem eigenen Fahrzeug vorausfahrenden und einem dem eigenen Fahrzeug in ausreichendem Sicherheitsabstand nachfolgenden fremden Fahrzeug in einer Seitenansicht.
- Fig. 2: eine zweite Momentaufnahme einer Verkehrssituation mit einem einem eigenen Fahrzeug vorausfahrenden und einem dem eigenen Fahrzeug unter Unterschreitung eines Sicherheitsabstands nachfolgenden fremden Fahrzeug in einer Seitenansicht.
- Fig. 3: ein Ablaufdiagramm eines Verfahrens zur Warnung bei Unterschreitung eines Sicherheitsabstands zwischen aufeinander folgenden Fahrzeugen, einem eigenen Fahrzeug und einem diesem nachfolgenden, fremden Fahrzeug.

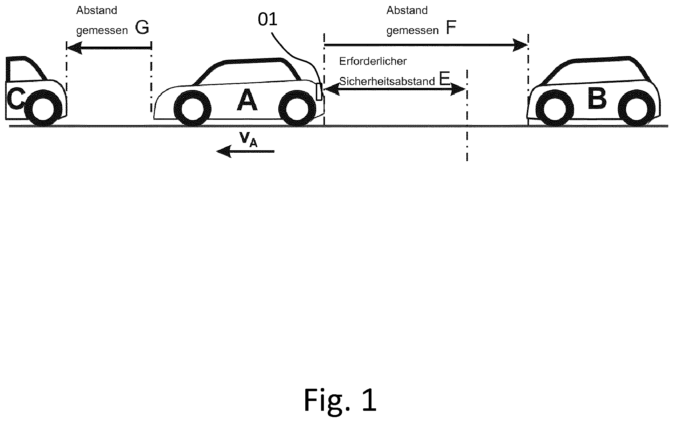

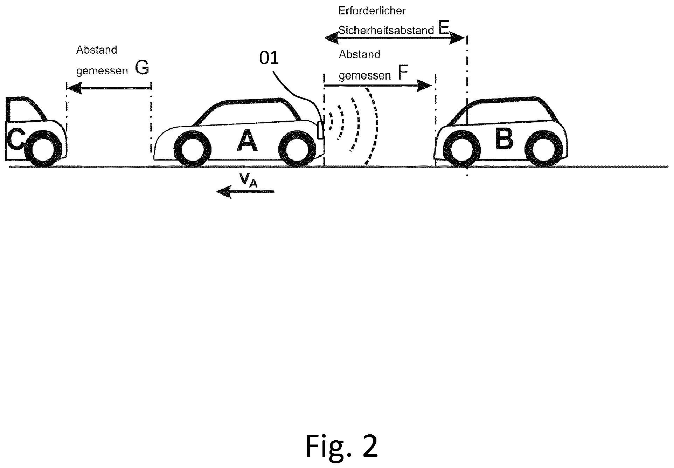

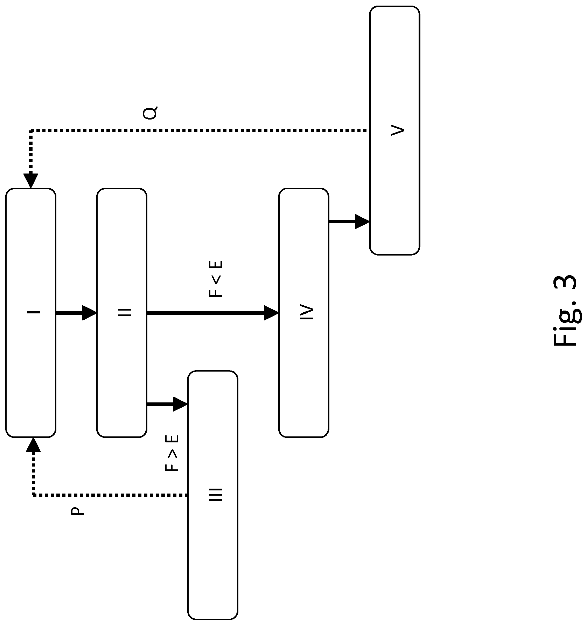

Ein in Fig. 3 in seinem Ablauf dargestelltes Verfahren zur Warnung bei Unterschreitung eines Sicherheitsabstands zwischen beispielsweise wie in Fig. 1 und in Fig. 2 dargestellt aufeinander folgenden Fahrzeugen C, A, B, einem eigenen Fahrzeug A, einem diesem vorausfahrenden fremden Fahrzeug C und einem dem eigenen Fahrzeug A nachfolgenden, fremden Fahrzeug B, sieht in einem zunächst stattfindenden ersten Verfahrensschritt I vor, vom vorausfahrenden, eigenen Fahrzeug A aus einen Abstand F zum nachfolgenden, fremden Fahrzeug B zu erfassen.

Dies kann beispielsweise durch beispielsweise am Heck des eigenen Fahrzeugs A angeordnete geeignete Abstandssensoren, wie etwa Ultraschallsensoren erfolgen. Ebenfalls geeignet ist eine Abstandsmessung per RADAR (Radio Detection And Ranging) oder per LIDAR (Light Detection And Ranging).

Das Verfahren kann hierbei vorsehen, dass die durch die Erfassung des Abstands F vom eigenen Fahrzeug A zum diesem nachfolgenden, fremden Fahrzeug B erfolgende Überwachung des Abstands F im ersten Verfahrensschritt I permanent oder in beispielsweise eng getakteten, diskreten Schritten erfolgt.

Mit anderen Worten sieht das Verfahren zunächst im ersten Verfahrensschritt I eine Überwachung des Abstands F zwischen dem vorausfahrenden, eigenen Fahrzeug A und dem nachfolgenden, fremden Fahrzeug B durch beispielsweise permanente oder beispielsweise eng getaktete, in diskreten Schritten vorzunehmende Messung des Abstands vom vorausfahrenden, eigenen Fahrzeug aus zum nachfolgenden, fremden Fahrzeug vor.

Vorteilhaft sind zur Abstandsmessung vorgesehene Mittel, wie etwa der oder die erwähnten Sensoren umfassende Mittel, in einer oder in mehreren, am Heck des eigenen Fahrzeugs A angeordneten Fahrzeugleuchten beherbergt. Hierdurch sind diese einerseits vor Umwelteinflüssen geschützt beherbergt und andererseits ergeben sich kurze und damit ausfallsicherere Verbindungsleitungen zu den zur Ausführung der weiteren Verfahrensschritte erforderlichen Einrichtungen und Mitteln.

In einem sich an den ersten Verfahrensschritt I anschließenden zweiten Verfahrensschritt II sieht das Verfahren vor, den erfassten Abstand mit einem einem mindestens einzuhaltenden Sicherheitsabstand E entsprechenden Schwellenwert zu vergleichen.

Der im zweiten Verfahrensschritt II stattfindende Vergleich des gemessenen Abstands F mit dem einem Mindestabstand proportionalen und einem mindestens einzuhaltenden Sicherheitsabstand E entsprechenden Schwellenwert kann beispielsweise permanent oder in beispielsweise eng getakteten, beispielsweise mit der Messung synchronisierten diskreten Schritten stattfinden.

Das eigene Fahrzeug A, vorzugsweise mindestens eine vorteilhaft als Heckleuchte ausgebildete, am Heck des eigenen Fahrzeugs A angeordnete Fahrzeugleuchte 01, ist zur Durchführung des im zweiten Verfahrensschritt stattfindenden Vergleichs vorteilhaft mit einen oder mehrere Mikroprozessoren sowie zur Speichermittel umfassenden Mitteln ausgestattet.

Das Verfahren endet in einem in demjenigen Fall nach dem zweiten Verfahrensschritt II folgenden dritten Verfahrensschritt III, wenn das Ergebnis des im zweiten Verfahrensschritt II stattfindenden Vergleichs ist, dass der erfasste Abstand F größer ist, als der dem mindestens einzuhaltenden Sicherheitsabstand E entsprechende Schwellenwert.

In diesem Fall gilt es keine gesonderten Maßnahmen zu treffen. Der Sicherheitsabstand E wird eingehalten, es besteht keine akute Gefahrensituation.

Alternativ kann das Verfahren in demjenigen Fall, dass wenn das Ergebnis des im zweiten Verfahrensschritt II stattfindenden Vergleichs ist, dass der erfasste Abstand F größer ist, als der dem mindestens einzuhaltenden Sicherheitsabstand E entsprechende Schwellenwert, wie durch einen in Fig. 3 gestrichelt dargestellten Pfeil P angedeutet zumindest so lange mit dem ersten Verfahrensschritt I erneut von vorn beginnen, so lange das eigene Fahrzeug A in Betrieb ist und damit aktiv am Verkehrsgeschehen teilnimmt.

In diesem Fall kann im dritten Verfahrensschritt III beispielsweise eine Abfrage erfolgen, ob das eigene Fahrzeug A sich in Betrieb befindet, oder nicht. Dies kann beispielsweise durch Abfrage einer Stellung eines Zündschlüssels und/oder durch Abfrage einer Betätigung einer Start-Stopp-Taste festgestellt werden.

Wenn das Ergebnis des im zweiten Verfahrensschritt II stattfindenden Vergleichs hingegen ist, dass der erfasste Abstand F kleiner ist, als der Schwellenwert E, dann sieht das Verfahren vor, dass sich an den zweiten Verfahrensschritt II ein vierter Verfahrensschritt IV anschließt, in welchem vierten Verfahrensschritt IV eine zumindest kurzzeitige Änderung des momentanen Betriebszustands wenigstens einer vom nachfolgenden, fremden Fahrzeug B aus erkennbaren Lichtfunktion mindestens einer Fahrzeugleuchte 01 des vorausfahrenden, eigenen Fahrzeugs A erfolgt.

Die im vierten Verfahrensschritt IV stattfindende, mindestens kurzzeitige Änderung des momentanen Betriebszustands wenigstens einer vom nachfolgenden, fremden Fahrzeug B aus erkennbaren Lichtfunktion mindestens einer Fahrzeugleuchte 01 des vorausfahrenden, eigenen Fahrzeugs A kann beispielsweise synchron mit dem Ergebnis des Vergleichs stattfinden.

Das eigene Fahrzeug A, vorzugsweise mindestens eine vorteilhaft als Heckleuchte ausgebildete, am Heck des eigenen Fahrzeugs A angeordnete Fahrzeugleuchte 01, ist zur Durchführung der im vierten Verfahrensschritt IV stattfindenden Änderung des momentanen Betriebszustands wenigstens einer vom nachfolgenden, fremden Fahrzeug B aus erkennbaren Lichtfunktion vorteilhaft mit beispielsweise einen oder mehreren Mikroschalter umfassende, eine Stromzufuhr zu einem oder mehreren zur Erfüllung der Lichtfunktion vorgesehenen Lichtquellen zu unterbrechen und/oder herzustellen in der Lage befindlichen Mitteln ausgestattet, die wiederum vorteilhaft mit den beispielsweise Mikroprozessoren sowie Speichermittel umfassenden Mitteln zur Ausführung des Vergleichs im zweiten Verfahrensschritt II geeigneten Mitteln verbunden sein können.

Darüber hinaus können die zur Ausführung des vierten Verfahrensschritts IV erforderlichen beziehungsweise vorgesehenen Mittel einen Energiespeicher zur Bereitstellung zum gegebenenfalls bei Änderung des Betriebszustands gegebenenfalls notwendigen Aktivieren notwendiger Energie umfassen.

Dies kann beispielsweise der Fall sein, wenn die Änderung des Betriebszustands vorsieht, eine momentan deaktivierte Lichtfunktion kurzzeitig zu aktivieren.

In einem sich an den vierten Verfahrensschritt IV anschließenden fünften Verfahrensschritt V kann das Verfahren wiederum enden.

Alternativ kann das Verfahren im Anschluss an den vierten Verfahrensschritt IV wie durch einen in Fig. 3 gestrichelt dargestellten Pfeil Q angedeutet zumindest so lange mit dem ersten Verfahrensschritt I erneut von vorn beginnen, so lange das eigene Fahrzeug A in Betrieb ist und damit aktiv am Verkehrsgeschehen teilnimmt.

In diesem Fall kann im fünften Verfahrensschritt V beispielsweise eine Abfrage erfolgen, ob das eigene Fahrzeug A sich in Betrieb befindet, oder nicht. Dies kann beispielsweise durch Abfrage einer Stellung eines Zündschlüssels und/oder durch Abfrage einer Betätigung einer Start-Stopp-Taste festgestellt werden.

Bezogen auf die in Fig. 1 und in Fig. 2 gezeigten Darstellungen, vergleicht das eigene Fahrzeug A den realen Abstand F zu dem nachfolgenden Fahrzeug B und vergleicht diesen mit dem einem ermittelten Mindestabstand proportionalen Sicherheitsabstand E (Fig. 1).

Die Proportionalität und/oder der Mindestabstand selbst können auf Grund der Parameter wie Geschwindigkeit, eigene Bremsleistung, durchschnittlicher Reaktionsweg, Fahrbahnverhältnisse, eventuell auch mit Geschwindigkeit und Verzögerung des nachkommenden, fremden Fahrzeugs B veränderbar sein.

Wird nun der Abstand F kleiner dem Abstand E erfolgt die Ausgabe eines Warnsignals an den Fahrer des nachfolgenden, fremden Fahrzeugs B, vorzugsweise über die Bremslichtfunktion (Fig. 2).

Dies hat den Vorteil, dass der Fahrer des nachkommenden, fremden Fahrzeuges B ganz automatisch reagiert, in dem er es Bremst und so die Gefahrenquelle auflöst.

Das Verfahren kann demnach vorsehen, dass vom eigenen Fahrzeug A aus der tatsächliche, reale Abstand F zum nachfolgenden, fremden Fahrzeug B erfasst wird und dass dieser mit einem beispielsweise auf Grund von Parametern wie Geschwindigkeit, eigener Bremsleistung, durchschnittlicher Reaktionsweg, Fahrbahnverhältnisse, etc. ermittelten Mindestabstand beziehungsweise einem diesem proportionalen Sicherheitsabstand E verglichen wird, der beispielsweise auch die Geschwindigkeit und Geschwindigkeitsänderung des nachkommenden fremden Fahrzeugs B berücksichtigen kann (Fig. 1).

Ist der gemessene Abstand F kleiner als ein dem Mindestabstand proportionaler Sicherheitsabstand E, erfolgt - abhängig vom momentanen Betriebszustand der zur Ausgabe des Warnsignals vorgesehenen Lichtfunktion - die zumindest einmalige, wenigstens kurzzeitige Aktivierung und/oder Deaktivierung der Lichtfunktion (Fig. 2).

Bei den Fahrzeugen A, B, C handelt es sich bevorzugt um zur Teilnahme am Straßenverkehr vorgesehene und/oder zugelassene Automobile und/oder Kraftfahrzeuge. Grundsätzlich ist die Erfindung jedoch auch zur Umsetzung in Verbindung mit Wasserfahrzeugen insbesondere zur Freizeit- und/oder Sportschifffahrt geeignet.

Das Verfahren kann hiernach einen beispielsweise permanenten oder in beispielsweise eng getakteten, beispielsweise mit der Messung synchronisierten diskreten Schritten stattfindenden Vergleich des gemessenen Abstands mit einem einem Mindestabstand proportionalen Schwellenwert vorsehen.

Dabei kann das Verfahren im Anschluss an eine beispielsweise permanente Überwachung des Abstands durch entsprechende Messung einen ständigen Vergleich der Messung mit einem einem Mindestabstand proportionalen Schwellenwert vorsehen.

Das Verfahren kann darüber hinaus in Abhängigkeit vom Ergebnis des Vergleichs die Ausgabe eines Warnsignals durch zumindest kurzzeitiges Aufleuchten oder Ausgehen mindestens einer vom nachfolgenden, fremden Fahrzeug B aus wahrnehmbaren Lichtfunktion wenigstens einer Fahrzeugleuchte 01 des eigenen Fahrzeugs A vorsehen, wenn das Ergebnis des Vergleichs eine Unterschreitung des Schwellenwerts ist.

Das Verfahren kann vorsehen, dass wenn eine von der im vierten Verfahrensschritt IV stattfindenden, mindestens kurzzeitigen Änderung des momentanen Betriebszustands betroffene, vom nachfolgenden, fremden Fahrzeug B aus erkennbare Lichtfunktion mindestens einer Fahrzeugleuchte 01 des vorausfahrenden, eigenen Fahrzeugs A aufgrund eines momentan vorherrschenden Fahrzustands des eigenen Fahrzeugs A momentan inaktiv ist, die zumindest kurzzeitige Änderung des momentanen Betriebszustands wenigstens einer vom nachfolgenden, fremden Fahrzeug B aus erkennbaren Lichtfunktion mindestens einer Fahrzeugleuchte 01 des vorausfahrenden, eigenen Fahrzeugs A eine zumindest kurzzeitige Aktivierung wenigstens einer vom nachfolgenden, fremden Fahrzeug B aus erkennbaren Lichtfunktion mindestens einer Fahrzeugleuchte 01 des vorausfahrenden, eigenen Fahrzeugs A vorsieht.

Das Verfahren kann alternativ oder zusätzlich vorsehen, dass wenn eine von der im vierten Verfahrensschritt IV stattfindenden, mindestens kurzzeitigen Änderung des momentanen Betriebszustands betroffene, vom nachfolgenden, fremden Fahrzeug B aus erkennbare Lichtfunktion mindestens einer Fahrzeugleuchte 01 des vorausfahrenden, eigenen Fahrzeugs A aufgrund eines momentan vorherrschenden Fahrzustands des eigenen Fahrzeugs A momentan aktiv ist, die zumindest kurzzeitige Änderung des momentanen Betriebszustands wenigstens einer vom nachfolgenden, fremden Fahrzeug B aus erkennbaren Lichtfunktion mindestens einer Fahrzeugleuchte 01 des vorausfahrenden, eigenen Fahrzeugs A eine zumindest kurzzeitige Deaktivierung wenigstens einer vom nachfolgenden, fremden Fahrzeug B aus erkennbaren Lichtfunktion mindestens einer Fahrzeugleuchte 01 des vorausfahrenden, eigenen Fahrzeugs A, entsprechend einer Multiplikation von -1 mit -1, wobei -1 einer momentanen Aktivierung entspricht, vorsieht.

Das Verfahren kann demnach vorsehen, dass wenn die zur mindestens kurzzeitigen Änderung ihres momentanen Betriebszustands im vierten Verfahrensschritt IV vorgesehene Lichtfunktion aufgrund eines momentan vorherrschenden Fahrzustands des eigenen Fahrzeugs A momentan inaktiv ist, die zumindest kurzzeitige Änderung des momentanen Betriebszustands wenigstens einer vom nachfolgenden, fremden Fahrzeug B aus erkennbaren Lichtfunktion mindestens einer Fahrzeugleuchte 01 des vorausfahrenden, eigenen Fahrzeugs A eine zumindest kurzzeitige Aktivierung wenigstens einer vom nachfolgenden, fremden Fahrzeug B aus erkennbaren Lichtfunktion mindestens einer Fahrzeugleuchte 01 des vorausfahrenden, eigenen Fahrzeugs A vorsieht, und wenn die vorgesehene Lichtfunktion aufgrund eines momentan vorherrschenden Fahrzustands des eigenen Fahrzeugs A momentan aktiv ist, die zumindest kurzzeitige Änderung des momentanen Betriebszustands wenigstens einer vom nachfolgenden, fremden Fahrzeug aus erkennbaren Lichtfunktion mindestens einer Fahrzeugleuchte 01 des vorausfahrenden, eigenen Fahrzeugs A eine zumindest kurzzeitige Deaktivierung wenigstens einer vom nachfolgenden, fremden Fahrzeug B aus erkennbaren Lichtfunktion mindestens einer Fahrzeugleuchte 01 des vorausfahrenden, eigenen Fahrzeugs A, entsprechend einer Multiplikation von -1 mit -1, wobei -1 einer momentanen Aktivierung entspricht, vorsieht.

Mit anderen Worten kann das Verfahren im Anschluss an den im zweiten Verfahrensschritt II stattfindenden Vergleich der im ersten Verfahrensschritt I vorgenommenen Messung mit einem einem Mindestabstand proportionalen Schwellenwert vorsehen, dass wenn das Ergebnis der Messung kleiner ist, als der Schwellenwert, im vierten Verfahrensschritt IV die Ausgabe eines Warnsignals durch zumindest kurzzeitiges Aufleuchten mindestens einer vom nachfolgenden, fremden Fahrzeug B aus wahrnehmbaren Lichtfunktion wenigstens einer Fahrzeugleuchte 01 des eigenen Fahrzeugs A erfolgt, wenn diese Lichtfunktion zuvor deaktiviert ist, und die Ausgabe eines Warnsignals durch zumindest kurzzeitiges Verdunkeln mindestens einer vom nachfolgenden, fremden Fahrzeug B aus wahrnehmbaren Lichtfunktion wenigstens einer Fahrzeugleuchte 01 des eigenen Fahrzeugs A erfolgt, wenn diese Lichtfunktion zuvor aktiviert ist.

Das Verfahren kann vorsehen den Schwellenwert in Abhängigkeit von Umgebungsbedingungen zu verändern und hierdurch anzupassen.

Die hierbei berücksichtigten Umgebungsbedingungen können Witterungsbedingungen umfassen, wie etwa - ohne Anspruch auf Vollständigkeit der nachfolgenden Auflistung - Außentemperatur, Sichtweite, Nässe, Glätte, Gefälle, Steigung sowie Kombinationen hiervon.

Darüber hinaus oder stattdessen können die Umgebungsbedingungen beispielsweise Verkehrsbedingungen umfassen, wie etwa - ohne Anspruch auf Vollständigkeit der nachfolgenden Auflistung - Fahrgeschwindigkeit VA des eigenen Fahrzeugs A, Relativgeschwindigkeit des nachfolgenden, fremden Fahrzeugs B zum eigenen Fahrzeug A, Geschwindigkeitsänderung des eigenen Fahrzeugs A, Geschwindigkeitsänderung des nachfolgenden, fremden Fahrzeugs B, Abstand zu einem vorausfahrenden, weiteren fremden Fahrzeug C, Kolonnenfahrt, Stau, Verkehrszeichen (dynamische Geschwindigkeitsbeschränkungen, Ampeln), sowie Kombinationen hiervon.

Der einem mindestens einzuhaltenden Sicherheitsabstand E zwischen dem dem eigenen Fahrzeug A nachfolgenden, fremden Fahrzeug B und dem eigenen Fahrzeug A entsprechende Schwellenwert kann durch einen veränderlichen Proportionalitätsfaktor, der mit einem sich zumindest anhand physikalischer Randbedingungen ergebenden Mindestabstand multipliziert wird, kontinuierlich oder in diskreten Schritten, beispielsweise anhand von in einem Datenspeicher abgelegten Tabellenwerten verändert und hierdurch angepasst werden.

Alternativ oder zusätzlich kann der einem mindestens einzuhaltenden Sicherheitsabstand E zwischen dem dem eigenen Fahrzeug A nachfolgenden, fremden Fahrzeug B und dem eigenen Fahrzeug A entsprechende Schwellenwert selbst aus einer Reihe von beispielsweise in einem Datenspeicher abgelegten Tabellenwerten anhand von Umgebungsbedingungen ausgewählt wird.

Der dem Sicherheitsabstand und dem Schwellenwert proportionale, erforderliche Mindestabstand kann von vielen Faktoren abhängen. Geschwindigkeit, Bremswirkung des eigenen Fahrzeugs A, technische Ausstattung, Fahrbahn, Temperatur, Witterung, Bereifung, etc.. All diese Faktoren könnten in der Abstandsbewertung mit einfließen. Ebenso wie der Umstand, dass der Mindestabstand von einer Vollbremsung ausgeht. Beispielsweise kann das Warnsignal auch erst bei einer deutlicheren Unterschreitung, wie z.B. < 70% des erforderlichen Mindestabstandes aktiv werden.

Demnach kann das Verfahren vorsehen, dass der Mindestabstand abhängig von den herrschenden physikalischen Randbedingungen und vom physiologisch bedingten Reaktionsvermögen eines durchschnittlichen Fahrers des nachfolgenden Fahrzeugs B gewählt ist.

Das Verfahren kann hierzu vorsehen, dass für unterschiedliche Umgebungs- wie etwa Witterungsbedingungen verschiedene Proportionalitätsfaktoren hinterlegt sind, die beispielsweise in Abhängigkeit von einer Temperatur- und/oder Niederschlags- und/oder Sichtweitenmessung ausgewählt werden und mit dem Mindestabstand zum dem Sicherheitsabstand entsprechenden Schwellenwert multipliziert werden. Alternativ oder zusätzlich können verschiedene Mindestabstände und/oder verschiedene Schwellenwerte beispielsweise in Abhängigkeit von einer Temperatur- und/oder Niederschlags- und/oder Sichtweitenmessung ausgewählt werden.

Bei der Lichtfunktion kann es sich um eine eigens zur Warnung bei Unterschreitung des Sicherheitsabstands vorgesehene Lichtfunktion handeln. Aus zulassungstechnischen Gründen ist es jedoch vorteilhaft, hierfür eine Lichtfunktion vorzusehen, welche ansonsten eine gesetzlich vorgeschriebene Funktion erfüllt.

Beispielsweise kann die Lichtfunktion synchron ausgeführte Wiederholblinklichtfunktionen an beiden zum nachfolgenden, fremden Fahrzeug B gerichteten und als Heckleuchten ausgebildeten Fahrzeugleuchten 01 am Heck des eigenen Fahrzeugs A umfassen.

Die Aktivierung der hierdurch gebildeten Warnblinklichtfunktion stellt bereits im heutigen Straßenverkehr ein gängiges Mittel dar, um andere Verkehrsteilnehmer auf eine besondere Gefahrensituation hinzuweisen.

Besonders vorteilhaft umfasst die im vierten Verfahrensschritt IV von einer Änderung ihres momentanen Betriebszustands betroffene Lichtfunktion eine Bremslichtfunktion.

Eine über die gewöhnliche Bremslichtfunktion erfolgende Warnung hat den Vorteil, dass der Fahrer des nachfolgenden, fremden Fahrzeugs B nichts Neues lernen muss. Er sieht die Bremslichter des ihm vorausfahrenden, eigenen Fahrzeugs A und bremst automatisch selber. Ohne es zu wissen löst er dadurch die Gefahrensituation auf.

Das Verfahren kann darüber hinaus eine Kolonnenfahrterkennung umfassen.

Eine solche Kolonnenfahrterkennung kann dazu vorgesehen sein, die zumindest kurzzeitige Änderung des momentanen Betriebszustands, i.e. Aktivierung und/oder Deaktivierung, der wenigstens einen vom nachfolgenden, fremden Fahrzeug B aus erkennbaren Lichtfunktion mindestens einer Fahrzeugleuchte 01 des vorausfahrenden, eigenen Fahrzeugs A abzuschalten, sobald eine Kolonnenfahrt mit dauerhaft niedrigem Abstand zwischen aufeinanderfolgenden Fahrzeugen, wie etwa einem dem eigenen Fahrzeug C vorausfahrenden, fremden Fahrzeug C, dem eigenen Fahrzeug A und einem dem eigenen Fahrzeug A nachfolgenden fremden Fahrzeug B, erkannt wird.

Die Kolonnenfahrterkennung kann eine Erfassung eines Abstands G zu mindestens einem kurz als Vordermann bezeichneten, vorausfahrenden, fremden Fahrzeug C vom eigenen Fahrzeug A aus umfassen.

Beispielsweise wenn dieser erfasste Abstand G zu mindestens einem auch als Vordermann bezeichneten, vorausfahrenden, fremden Fahrzeug C vergleichbar gering dem im ersten Verfahrensschritt I ebenfalls erfassten Abstand F des nachfolgenden, fremden Fahrzeugs B zum eigenen Fahrzeug A ist, wird von Kolonnenfahrt ausgegangen.

Eine Erfassung der Abstände mehrerer fremder Fahrzeuge untereinander und/oder vom eigenen Fahrzeug A zu mehreren fremden Fahrzeugen, vorzugsweise sowohl mehrerer vorausfahrender fremder Fahrzeuge C, als auch mehrerer nachfolgender fremder Fahrzeuge B, kann die Erkenntnis über das Vorliegen einer Kolonnenfahrt erheblich verbessern.

Es ist ersichtlich, dass die Erfindung verwirklicht sein kann durch ein Verfahren, welches den Fahrer eines einem eigenen Fahrzeug A nachfolgenden, fremden Fahrzeugs B ohne den Bedarf zusätzlicher und/oder gesonderter Infrastruktur in oder an dessen Fahrzeug B dazu anhält beziehungsweise anregt, einen Sicherheitsabstand E zwischen dessen Fahrzeug B und dem eigenen Fahrzeug A nicht zu unterschreiten.

Die Erfindung sieht demnach vor, dass der Abstand F zu dem nachkommenden Fahrzeug B vom eigenen Fahrzeug A aus erfasst und mit dem einem ermittelten Mindestabstand proportionalen Sicherheitsabstand E verglichen wird. Wird dieser unterschritten signalisiert das vorausfahrende, eigene Fahrzeug A dem Nachkommenden, dass es sich in einem gefährlich nahen Abstand befindet.

Dieses Signalisieren erfolgt vermittels zumindest kurzzeitiger Aktivierung und/oder Deaktivierung mindestens einer zum nachfolgenden Fahrzeug B gerichteten und/oder im Blickfeld des Fahrers des nachfolgenden Fahrzeugs B liegenden Lichtfunktion wenigstens einer am eigenen Fahrzeug A angeordneten Fahrzeugleuchte 01, insbesondere wenigstens einer Heckleuchte.

Dieses Signalisieren erfolgt vorteilhaft anhand einer Lichtfunktion einer ohnehin am vorausfahrenden eigenen Fahrzeug A angeordneten Fahrzeugleuchte 01, insbesondere einer Heckleuchte.

Besonders vorteilhaft erfolgt das Signalisieren mittels einer Lichtfunktion, die zur Teilnahme am Straßenverkehr vorgeschrieben ist. Hierdurch entfällt ein zusätzlicher Teil ansonsten notwendiger Infrastruktur.

Die Ausgabe eines Warnhinweises vermittels einer sowohl eine zur Teilnahme am Straßenverkehr vorgeschriebenen, als auch der Abstandswarnung dienenden und dadurch adaptiven Lichtfunktion einer Fahrzeugleuchte 01 des eigenen Fahrzeugs A an das nachfolgende Fahrzeug B, wenn dieses den erforderlichen Mindestabstand unterschreitet, hilft Auffahrunfälle zu vermeiden.

Wird ein anderes, neues Signal, beispielsweise eine flackernde dritte Bremslichtfunktion oder gar eine eigene Lichtfunktion vorgesehen, dann könnte dies zumindest unmittelbar nach der Einführung des erfindungsgemäßen Verfahrens in den Straßenverkehr den nachfolgenden Fahrer stärker irritieren, hätte aber zusätzlich den Vorteil, dass der Nachfolgende dadurch sein Abstandsempfinden überprüfen und dadurch verbessern kann. Eine nachhaltige Verbesserung des Abstandsempfindens ist die Folge.

Ein voranstehend beschriebenes Verfahren kann durch eine Fahrzeugleuchte 01 verwirklicht werden beziehungsweise sein.

Hierzu kann eine Abstandsmessung kann in mindestens eine Fahrzeugleuchte 01 des eigenen Fahrzeugs A integriert sein. Zur Abstandsmessung eingesetzte Mittel können einen oder mehrere Abstandssensoren sowie mindestens eine beispielsweise mit wenigstens einem zur Erfüllung wenigstens einer Lichtfunktion einer am Heck des eigenen Fahrzeugs A angeordneten Fahrzeugleuchte 01 vorgesehenen Leuchtmittel mit mindestens einer Lichtquelle verbundenen Auswerte- und Steuereinheit umfassen.

Eine entsprechend zur Ausführung eines voranstehend beschriebenen Verfahrens geeignete Fahrzeugleuchte 01 umfasst demnach vorteilhaft:
- zumindest ein Leuchtmittel mit mindestens einer Lichtquelle zur Erfüllung wenigstens einer Lichtfunktion,
- kurz als Mittel zur Abstandsmessung bezeichnete Mittel zur Messung des Abstands F zu einem einem mit der Fahrzeugleuchte 01 ausgestatteten eigenen Fahrzeug A nachfolgenden, fremden Fahrzeug B, und
- mit den Mitteln zur Abstandsmessung verbundene Mittel zum Vergleich des gemessenen Abstands F mit einem einem mindestens einzuhaltenden Sicherheitsabstand E zwischen dem dem eigenen Fahrzeug A nachfolgenden, fremden Fahrzeug B und dem eigenen Fahrzeug A entsprechenden Schwellenwert.

Die Mittel zum Vergleich sind mit mindestens einer Lichtquelle der Fahrzeugleuchte 01 derart verbunden, dass sie eine Stromzufuhr zu der Lichtquelle herzustellen und/oder zu unterbrechen in der Lage sind, mit der Folge, dass die Mittel zum Vergleich abhängig vom Ergebnis des Vergleichs und abhängig vom momentanen Betriebszustand der Lichtquelle diese ein- oder auszuschalten in der Lage sind.

Die Mittel zur Abstandsmessung erzeugen ein Ausgangssignal, welches einem Abstand F eines mit der Fahrzeugleuchte 01 ausgestatteten eigenen Fahrzeugs A zu einem diesem nachfolgenden, fremden Fahrzeug B proportional ist, oder dem auf sonstige Art und Weise der Abstand zu entnehmen ist.

Die Mittel zum Vergleich vergleichen das Ausgangssignal der Mittel zur Abstandsmessung mit einem einem mindestens einzuhaltenden Sicherheitsabstand E zwischen dem dem eigenen Fahrzeug A nachfolgenden, fremden Fahrzeug B und dem eigenen Fahrzeug A entsprechenden Schwellenwert für das Ausgangssignal. Das Ausgangssignal und der dem mindestens einzuhaltenden Sicherheitsabstand E zwischen dem dem eigenen Fahrzeug A nachfolgenden, fremden Fahrzeug B und dem eigenen Fahrzeug A entsprechenden Schwellenwert können beide analog oder digital vorliegen, oder gemischt.

Die Fahrzeugleuchte 01 kann Datenspeichermittel zur Speicherung zumindest eines einem mindestens einzuhaltenden Sicherheitsabstand E zwischen dem dem eigenen Fahrzeug A nachfolgenden, fremden Fahrzeug B und dem eigenen Fahrzeug A entsprechenden Schwellenwerts und/oder eines mit einem Mindestabstand zu einem Sicherheitsabstand E zu multiplizierenden Proportionalitätsfaktors umfassen.

Die Fahrzeugleuchte 01 kann Mittel zur Erfassung und/oder Erlangung von Umgebungsbedingungen sowie Mittel zur Veränderung des einem mindestens einzuhaltenden Sicherheitsabstand E zwischen dem dem eigenen Fahrzeug A nachfolgenden, fremden Fahrzeug B und dem eigenen Fahrzeug A entsprechenden Schwellenwerts in Abhängigkeit von den Umgebungsbedingungen umfassen.

Zur Erfassung von Umgebungsbedingungen können beispielsweise Sensoren vorgesehen sein ,welche Temperatur und/oder Sichtweite und/oder Niederschlagsmenge zu erfassen in der Lage sind.

Zur Erlangung von Umgebungsbedingungen hingegen kann eine Schnittstelle zu einem entsprechende Informationen über Umgebungsbedingungen fahrzeugseitig vorhaltenden Bordnetzwerk vorgesehen sein.

Wichtig ist in diesem Zusammenhang hervorzuheben, dass alternativ oder zusätzlich momentane Fahrzustände zumindest fremder Fahrzeuge B, C in der Umgebung des eigenen Fahrzeugs A zumindest Teil von Umgebungsbedingungen bilden können, welche in eine Veränderung des einem mindestens einzuhaltenden Sicherheitsabstand E zwischen dem dem eigenen Fahrzeug A nachfolgenden, fremden Fahrzeug B und dem eigenen Fahrzeug A entsprechenden Schwellenwerts mit einfließen können.

Auch Fahrzustände des eigenen Fahrzeugs A können in eine Veränderung des einem mindestens einzuhaltenden Sicherheitsabstand E zwischen dem dem eigenen Fahrzeug A nachfolgenden, fremden Fahrzeug B und dem eigenen Fahrzeug A entsprechenden Schwellenwerts mit einfließen.

Ohne Anspruch auf Vollständigkeit können dies momentane Geschwindigkeit momentane Bremsverzögerung, momentane Beschleunigung, momentaner Abstand zum dem eigenen Fahrzeug A vorausfahrenden Fahrzeug C, momentane Geschwindigkeit momentane Bremsverzögerung, momentane Beschleunigung, momentaner Abstand eines fremden Fahrzeugs B, C zum Vordermann und/oder zum Nachfolgenden sowie Kombinationen hiervon sein.

Die Fahrzeugleuchte 01 kann einen Speicher zum zumindest kurzzeitigen Betrieb einer Lichtquelle eines Leuchtmittels der Fahrzeugleuchte 01 benötigter elektrischer Energie umfassen. Dieser kann beispielsweise kapazitiver Natur sein. Er kann beispielsweise während einer im normalen Gebrauch des eigenen Fahrzeugs A stattfindenden regulären Aktivierung einer durch die Lichtquelle des entsprechenden Leuchtmittels verwirklichten Lichtfunktion aufgeladen werden.

Die Fahrzeugleuchte (01) ist zur Durchführung eines voranstehend beschriebenen Verfahrens geeignet.

Es ist ersichtlich, dass die Erfindung die Nachteile des Standes der Technik durch eine Abstandsmessung vom vorausfahrenden, eigenen Fahrzeug A aus und durch eine adaptive Lichtfunktion ebenfalls am vorausfahrenden, eigenen Fahrzeug A beseitigt, welche adaptive Lichtfunktion bei Unterschreitung eines mindestens einzuhaltenden Sicherheitsabstands E zwischen dem dem eigenen Fahrzeug A nachfolgenden, fremden Fahrzeug B und dem eigenen Fahrzeug A aktiviert wird, beispielsweise durch mehrmaliges Aufblinken der Bremslichtfunktion.

Die Abstandsmessung ist vorteilhaft in die Fahrzeugleuchte 01 des eigenen Fahrzeugs A integriert.

Zur Abstandsmessung eingesetzte Mittel können einen oder mehrere Abstandssensoren sowie mindestens eine beispielsweise mit wenigstens einem zur Erfüllung wenigstens einer Lichtfunktion einer am Heck des eigenen Fahrzeugs A angeordneten Fahrzeugleuchte 01 vorgesehenen Leuchtmittel mit mindestens einer Lichtquelle verbundenen Auswerte- und Steuereinheit umfassen.

Darüber hinaus kann eine Kolonnenfahrterkennung vorgesehen sein, welche die beispielsweise durch die mindestens eine Lichtquelle des wenigstens einen zur Erfüllung zumindest einer Lichtfunktion einer am Heck des eigenen Fahrzeugs A angeordneten Fahrzeugleuchte 01 vorgesehenen Leuchtmittels verwirklichte adaptive Lichtfunktion abschaltet, sobald eine Kolonnenfahrt mit dauerhaft niedrigem Abstand zwischen aufeinanderfolgenden Fahrzeugen erkannt worden ist.

Dies kann durch Erfassung des Abstands zum Vordermann vorgenommen werden. Ist dieser ebenfalls gering, kann von Kolonnenfahrt ausgegangen werden.

Die Erfindung ermöglicht auch eine Nachrüstung bestehender Fahrzeuge und erhöht die Verkehrssicherheit ohne notwendige technische Einrichtungen der anderen Verkehrsteilnehmer.

Vorteile der Erfindung gegenüber dem Stand der Technik sind unter Anderem, dass während des Betriebs des eigenen Fahrzeugs A eine mögliche Gefahrensituation durch die Unterschreitung des Mindestabstandes eines nachfolgenden, fremden Fahrzeugs B zum eigenen Fahrzeug A erkannt, und dies dem nachfolgenden Fahrzeug B beispielsweise über die Bremslichter beziehungsweise beispielsweise die Bremslichtfunktion signalisiert wird.

Der Nachkommende reagiert entsprechend intuitiv, bremst und löst die Gefahrensituation unbewusst wieder auf.

Es wird hierfür nur eine Abstandsmessvorrichtung an dem vorausfahrenden, eigenen Fahrzeug A benötigt. Das nachfolgende, fremde Fahrzeug B benötigt keine gesonderten Einrichtungen.

Der Schutz gilt dadurch auch für alte Fahrzeuge, ohne diese dafür auf- oder nachrüsten zu müssen

Das Verfahren wird vom vorausfahrenden, eigenen Fahrzeug A aus durchgeführt, gibt das Warnsignal bei Unterschreitung des Sicherheitsabstands E via einer oder mehrerer Lichtfunktionen an den Nachkommenden aus und schützt dadurch beide vor einer möglichen Kollision, sowohl das eigene Fahrzeug A, als auch das fremde Fahrzeug B.

Durch eine mögliche zusätzliche Erfassung der nach vorne gerichteten Verkehrssituation, insbesondere des Abstands zum unmittelbar vorausfahrenden Fahrzeug C und/oder der Abstände zwischen unmittelbar vorausfahrenden Fahrzeugen, können das Verfahren und die entsprechend zur Durchführung des Verfahrens ausgestattete Fahrzeugleuchte 01 auch dazu dienen, Staus und/oder Kolonnen-Verkehr zu erkennen.

Hierdurch kann die Beurteilung einer momentanen Situation sowohl bezüglich des einem mindestens einzuhaltenden Sicherheitsabstand E zwischen dem dem eigenen Fahrzeug A nachfolgenden, fremden Fahrzeug B und dem eigenen Fahrzeug A entsprechenden Schwellenwerts beziehungsweise hinsichtlich dessen Auswahl und/oder Festlegung, als auch bezüglich einer Unterschreitung des gemessenen Abstands des nachfolgenden, fremden Fahrzeugs B zum diesem vorausfahrenden, eigenen Fahrzeug A nochmals verbessert werden.

Durch ein eigenständiges Warnsignal, wie etwa eine flackernde dritte Bremslichtfunktion, würden die nachkommenden Fahrzeuge ihre Abstandseinschätzung überprüfen können und diese nachhaltig verbessern.

Das Verfahren und die Fahrzeugleuchte 01 können darüber hinaus die gewonnene Information über das beispielsweise aufgrund einer Unterschreitung des gemessenen Abstands G des eigenen Fahrzeugs A zu einem diesem vorausfahrenden, fremden Fahrzeug C Vorliegen einer Gefahrensituation im Vorfeld des eigenen Fahrzeugs A direkt an ein dem eigenen Fahrzeug A nachfolgendes, fremdes Fahrzeug B schicken.

Ist das nachfolgende fremde Fahrzeug B mit einer geeigneten Einrichtung ausgestattet, kann diese Information dazu vorgesehen werden, dass das fremde Fahrzeug B selbstständig verzögert.

Zusätzliche Vorteile gegenüber dem Stand der Technik sind, dass ein am eigenen Fahrzeug A angeordneter, nach vorne gerichteter Abstandssensor eine auffällige Verzögerung eines vorausfahrenden, fremden Fahrzeugs C schneller erkennt, als der Fahrer des eigenen Fahrzeugs A. Hierdurch kann ein Bremssignal selbstständig nach hinten weitergegeben werden, wodurch unter Anderem in Kolonnenfahrt Auffahrunfälle nochmals weiter verringert werden können.

Die Fahrzeugleuchte kann einzelne oder eine Kombination der zuvor in Verbindung mit der Erfindung und/oder dem Verfahren beschriebene Merkmale aufweisen, ebenso wie das Verfahren einzelne oder eine Kombination mehrerer zuvor in Verbindung mit der Erfindung und/oder der Fahrzeugleuchte beschriebene Merkmale aufweisen und/oder verwirklichen kann.

Die Fahrzeugleuchte und/oder das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung erwähnte Merkmale aufweisen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung ist insbesondere im Bereich der Herstellung und dem Betrieb von Anlagen und Vorrichtungen der Automatisierungstechnik gewerblich anwendbar, wo mit einer Vielzahl beispielsweise gleichartiger Artikel umgegangen werden muss, beispielsweise in der Automatisierungstechnik für die Lebensmittel- und Getränkeindustrie und/oder in der Verpackungstechnik und in der Verpackungsindustrie.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Fahrzeugleuchte

- A: eigenes Fahrzeug
- B: nachfolgendes, fremdes Fahrzeug
- C: vorausfahrendes Fahrzeug

- E: Sicherheitsabstand
- F: gemessener Abstand (eigenes Fahrzeug - nachfolgendes fremdes Fahrzeug)
- G: gemessener Abstand (eigenes Fahrzeug - vorausfahrendes Fahrzeug)

- P: Pfeil
- Q: Pfeil

## Patentansprüche

1. Verfahren zur Warnung bei Unterschreitung eines Sicherheitsabstands (E) zwischen aufeinander folgenden Fahrzeugen, einem eigenen Fahrzeug (A) und einem diesem nachfolgenden Fahrzeug (B), wobei vom eigenen Fahrzeug (A) aus ein Abstand (F) zum nachfolgenden Fahrzeug (B) erfasst wird, der erfasste Abstand (F) mit einem dem Sicherheitsabstand (E) entsprechenden Schwellenwert verglichen wird, und wenn das Ergebnis des Vergleichs ist, dass der erfasste Abstand (F) kleiner ist, als der Schwellenwert, eine zumindest kurzzeitige Änderung des momentanen Betriebszustands wenigstens einer vom nachfolgenden, fremden Fahrzeug (B) aus erkennbaren Lichtfunktion am eigenen Fahrzeug (A) erfolgt.

2. Verfahren nach Anspruch 1, wobei es so lange erneut von vorn beginnt, wie das eigene Fahrzeug (A) in Betrieb ist.

3. Verfahren nach Anspruch 1 oder 2, wobei es vorsieht, dass wenn die Lichtfunktion aufgrund eines momentan vorherrschenden Fahrzustands des eigenen Fahrzeugs (A) momentan inaktiv ist, die zumindest kurzzeitige Änderung des momentanen Betriebszustands wenigstens einer vom nachfolgenden Fahrzeug (B) aus erkennbaren Lichtfunktion eine zumindest kurzzeitige Aktivierung vorsieht, und wenn die Lichtfunktion aufgrund eines momentan vorherrschenden Fahrzustands des eigenen Fahrzeugs (A) momentan aktiv ist, die zumindest kurzzeitige Änderung des momentanen Betriebszustands wenigstens einer vom nachfolgenden Fahrzeug (B) aus erkennbaren Lichtfunktion eine zumindest kurzzeitige Deaktivierung vorsieht.

4. Verfahren nach Anspruch 1, 2 oder 3, wobei es vorsieht, den Schwellenwert in Abhängigkeit von Umgebungsbedingungen zu verändern und hierdurch anzupassen.

5. Verfahren nach Anspruch 4, wobei die Umgebungsbedingungen Witterungsbedingungen umfassen.

6. Verfahren nach Anspruch 4 oder 5, wobei die Umgebungsbedingungen Verkehrsbedingungen umfassen.

7. Verfahren nach Anspruch 4, 5 oder 6, wobei der Schwellenwert durch einen veränderlichen Proportionalitätsfaktor, der mit einem sich zumindest anhand physikalischer Randbedingungen ergebenden Mindestabstand multipliziert wird, kontinuierlich oder in diskreten Schritten verändert und hierdurch angepasst wird.

8. Verfahren nach Anspruch 4, 5 oder 6, wobei der Schwellenwert aus einer Reihe von Werten anhand von Umgebungsbedingungen ausgewählt wird.

9. Verfahren nach einem der voranstehenden Ansprüche, wobei die Lichtfunktion synchron ausgeführte Wiederholblinklichtfunktionen am Heck des eigenen Fahrzeugs (A) umfasst.

10. Verfahren nach einem der voranstehenden Ansprüche, wobei die Lichtfunktion eine Bremslichtfunktion umfasst.

11. Verfahren nach einem der voranstehenden Ansprüche, wobei es eine Kolonnenfahrterkennung umfasst, welche die zumindest kurzzeitige Änderung des momentanen Betriebszustands der Lichtfunktion abschaltet, sobald eine Kolonnenfahrt mit dauerhaft niedrigem Abstand zwischen aufeinanderfolgenden Fahrzeugen (C, A, B) erkannt wird.

12. Verfahren nach Anspruch 11, wobei es eine Erfassung des Abstands zu mindestens einem vorausfahrenden Fahrzeug (C) vom eigenen Fahrzeug (A) aus umfasst, wobei wenn dieser vergleichbar gering dem Abstand des nachfolgenden Fahrzeugs (B) zum eigenen Fahrzeug (A) ist, von Kolonnenfahrt ausgegangen wird.

13. Fahrzeugleuchte (01), umfassend zumindest ein Leuchtmittel mit mindestens einer Lichtquelle zur Erfüllung wenigstens einer Lichtfunktion, sowie:
- Mittel zur Abstandsmessung zu einem einem mit der Fahrzeugleuchte (01) ausgestatteten eigenen Fahrzeug (A) nachfolgenden, fremden Fahrzeug (B), und
- mit den Mitteln zur Abstandsmessung verbundene Mittel zum Vergleich des gemessenen Abstands (F) mit einem Schwellenwert,
wobei die Mittel zum Vergleich mit mindestens einer Lichtquelle der Fahrzeugleuchte (01) derart verbunden sind, dass sie eine Stromzufuhr zu der Lichtquelle herzustellen und/oder zu unterbrechen in der Lage sind, mit der Folge, dass die Mittel zum Vergleich abhängig vom Ergebnis des Vergleichs und abhängig vom momentanen Betriebszustand der Lichtquelle diese ein- oder auszuschalten in der Lage sind.

14. Fahrzeugleuchte nach Anspruch 13, wobei sie Datenspeichermittel zur Speicherung zumindest eines Schwellenwerts und/oder eines Proportionalitätsfaktors umfasst.

15. Fahrzeugleuchte nach Anspruch 13 oder 14, wobei sie Mittel zur Erfassung und/oder Erlangung von Umgebungsbedingungen sowie Mittel zur Veränderung des Schwellenwerts in Abhängigkeit von den Umgebungsbedingungen umfasst.
